(19) Europäisches Patentamt
European Patent Office
Office européen des brevets

(11) Publication number : **0 425 488 B1**

(12) # EUROPEAN PATENT SPECIFICATION

(45) Date of publication of patent specification : **15.04.92 Bulletin 92/16**

(51) Int. Cl.$^5$ : **B01J 37/04,** B01J 23/56, B01D 53/36

(21) Application number : **89903007.6**

(22) Date of filing : **13.07.88**

(86) International application number : **PCT/US88/02380**

(87) International publication number : **WO 90/00441 25.01.90 Gazette 90/03**

(54) **POLLUTION CONTROL CATALYST FOR MINIMIZING H2S EMISSIONS.**

The file contains technical information submitted after the application was filed and not included in this specification

(43) Date of publication of application : **08.05.91 Bulletin 91/19**

(45) Publication of the grant of the patent : **15.04.92 Bulletin 92/16**

(84) Designated Contracting States : **DE FR GB IT**

(73) Proprietor : **ALLIED-SIGNAL INC.
Columbia Road and Park Avenue P.O. Box 2245R
Morristown New Jersey 07962-2245 (US)**

(72) Inventor : **JOY, George, C., III
338 South Gibbons Avenue
Arlington Heights, IL 60004 (US)**
Inventor : **LESTER, George, R.
209 Vine Street - 2A
Park Ridge, IL 60068 (US)**
Inventor : **MARINANGELI, Richard, E.
735 Gettysburg Drive
Arlington Heights, IL 60004 (US)**

(74) Representative : **Brock, Peter William et al
URQUHART-DYKES & LORD 91 Wimpole Street
London W1M 8AH (GB)**

EP 0 425 488 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

Gaseous waste products resulting from the combustion of hydrocarbonaceous fuels, such as gasoline and fuel oils, comprise carbon monoxide, hydrocarbons and nitrogen oxides as products of combustion or incomplete combustion, and pose a serious health problem with respect to pollution of the atmosphere. While exhaust gases from other carbonaceous fuel-burning sources, such as stationary engines, industrial furnaces, etc., contribute substantially to air pollution, the exhaust gases from automotive engines are a principal source of pollution. Because of these health problem concerns, strict controls have been established in many countries on the amounts of carbon monoxide, hydrocarbons and nitrogen oxides which automobiles can emit. The implementation of these controls has resulted in the use of catalytic converters to reduce the amount of pollutants emitted from automobiles.

In order to achieve the simultaneous conversion of carbon monoxide, hydrocarbon and nitrogen oxide pollutants to innocuous gases, it has become the practice to employ exhaust gas catalysts in conjunction with air-to-fuel ratio control means which functions in response to a feedback signal from an oxygen sensor in the engine exhaust system. This type of catalyst is commonly called a three component control catalyst. The air-to-fuel ratio control means is typically programmed to provide fuel and air to the engine at a ratio at or near the stoichiometric balance of oxidants and reductants in the hot exhaust gases at engine cruising conditions, and to a stoichiometric excess of reductants during engine startup and at engine acceleration conditions. The result is that the composition of the exhaust gases with which the catalyst is contacted fluctuates almost constantly, such that conditions to which the catalyst is exposed are alternatively net-reducing (fuel rich) and net-oxidizing (fuel lean). A catalyst for the oxidation of carbon monoxide and hydrocarbons and the reduction of nitric oxide must be capable of operating in such a dynamic environment.

The exhaust gas also contains other components such as sulfur oxides, phosphorus and zinc compounds which are known catalyst poisons. The sulfur oxides present in the exhaust stream can react with the catalyst to form other products. For example under fuel lean (net-oxidizing) conditions, sulfur dioxide ($SO_2$) reacts with oxygen ($O_2$) over the catalyst to form sulfur trioxide ($SO_3$) which is then converted to sulfates ($SO_4^=$) by reaction with water. Under fuel rich (net-reducing) conditions the $SO_2$ reacts with hydrogen ($H_2$) to form hydrogen sulfide ($H_2S$). The formation of $H_2S$ is particularly objectionable because of its strong odor.

In addition to the formation of $H_2S$ over noble metal catalyst, a storage phenomenon has also been observed. This storage phenomenon has been documented in the literature, G. J. Barnes and J. C. Summers, "Hydrogen Sulfide Formation Over Automotive Oxidation Catalysts," Society of Automotive Engineers, Paper No. 750093. The experimenters showed that sulfur accumulated on noble metal catalysts under both oxidizing and reducing atmospheres. For example, under oxidizing conditions the sulfur is typically stored as sulfates ($SO_4^=$) which is converted to $H_2S$ under reducing conditions.

Although this phenomenon has been recognized for many years, the problem which it generates, i.e. unpleasant odor, was relatively minor and was not of much concern until recently. In the past few years automotive catalyst technology has improved so that the catalysts are much more active than previous catalysts. Part of this improvement has been achieved by increasing the content of the rare earths (hereinafter referred to as a first active component) present in the catalytic composite. Unfortunately, the rare earths appear to increase the storage of sulfur during fuel lean operation, and when release occurs the concentration of hydrogen sulfide is much larger than would have been anticipated, based on the sulfur content of the fuel. Consequently, the resultant odor is quite noticeable and many more drivers are offended by the increased hydrogen sulfide odors.

Since the odor has become more noticeable and objectionable, a need exists to minimize the hydrogen sulfide emissions from catalyst equipped automobiles. The instant invention cures this problem by providing a catalytic composite which contains a metal, or an oxide thereof, that forms stable metal sulfides (hereinafter referred to as a second active component) under rich conditions and therefore minimizes the release of hydrogen sulfide under fuel rich conditions. Some of the metals which are very effective in this regard are lead, zinc, copper, nickel, and cobalt.

Catalysts which contain second active components such as nickel are well known in the art. For example, U.S. Patents 3,840,471 and 3,903,020 teach the use of precious metals in combination with rare earth stabilizers and promoters such as nickel and iron. However, the prior art disclosed the use of these second active components as promoters. That is, these metals are capable of promoting reactions such as the water gas shift and steam reforming reactions. No mention has been made in the art about using such second active components to minimize the amount of hydrogen sulfide which is formed over conventional automotive catalysts.

Additionally, the usual manner of depositing said second active components is to uniformly distribute these

components on a high surface area refractory inorganic oxide support which is usually alumina and which also has noble metals deposited thereon. For example, in FR-A-2 321 940 the second active component is mixed with an alumina/cerium oxide support, calcined, and then impregnated with noble metals. However, when these catalysts are exposed to high temperature (>750°C), the second active components can interact with the alumina support to form metal aluminates. These aluminates are very stable and are not active for the desired reactions. This means that the catalytic composite will lose activity upon exposure to such high temperatures, due to changes in the second active components. Another factor is that while components such as nickel, cobalt, etc. promote some reactions in conjunction with the noble metal species, they also act as a poison to the noble metal components for other reactions. Both of these phenomena are well known in the art.

The instant invention also cures this problem by depositing the second active component on a secondary refractory inorganic oxide such as zirconia, ceria, titania, etc. Since the second active components are metals, this means that metal aluminates are not formed at high temperatures because the metals do not interact with either zirconia, ceria or titania, and are not in direct contact with the alumina support. Secondly, because the second active components are not in intimate contact with a majority of the noble metal components, there is less detrimental interaction between the second active component and the noble metal species. An improved catalytic composite is thereby produced by the instant invention.

In certain applications nitric oxides are not a problem and therefore a catalyst need only oxidize the hydrocarbons and carbon monoxide to carbon dioxide and water. This type of catalyst is commonly called an oxidation catalyst. Additionally, some applications may require both a three component control catalyst and an oxidation catalyst. In both of these possible applications, the exhaust gas may become fuel-rich and thus present the same problem as for a three component control catalyst. The instant invention also cures the $H_2S$ problem associated with an oxidation catalyst.

## SUMMARY OF THE INVENTION

This invention relates to an $H_2S$-minimizing pollution control catalytic composite, a method of manufacturing said composite and a method of use of the catalytic composite for the treatment of an exhaust gas from an internal combustion engine. The catalytic composite comprises a mixture of a primary refractory inorganic oxide support having dispersed thereon a first active component selected from the group consisting of rare earth oxides and mixtures thereof and of a secondary refractory inorganic oxide support selected from the group consisting of zirconia, titania, ceria, silica, magnesia, natural and synthetic zeolites and mixtures thereof having dispersed thereon a second active component selected from the group consisting of metals which form stable metal sulfides under fuel rich conditions, oxides of these metals and mixtures thereof, said mixture of supports or said primary support having a main catalytic metal selected from the group consisting of platinum, palladium, rhodium, ruthenium, iridium and mxitures thereof deposited thereon.

Accordingly, one specific embodiment of the invention comprises a catalytic composite for treatment of an exhaust gas from an internal combustion engine, said exhaust gas comprising carbon monoxide, hydrocarbons, nitrogen oxides and sulfur oxides. The catalytic composite comprises a mixture of an alumina support having dispersed thereon a cerium oxide and a ceria support having dispersed thereon nickel wherein said mixture of supports has platinum and rhodium dispersed thereon.

A further embodiment of the invention comprises a method of manufacturing said composite comprising the steps of:

a) dispersing a first active component selected from the group consisting of the rare-earth oxides and mixtures thereof onto a primary refractory inorganic oxide support;

b) dispersing a second active component selected from the group consisting of metals which form a stable sulfide under fuel rich conditions, oxides of these metals and mixtures thereof, onto a secondary refractory inorganic oxide support selected from the group consisting of zirconia, titania, ceria, silica, magnesia, natural and synthetic zeolites and mixtures thereof;

c) preparing a slurry with the mixture of said supports formed in steps (a) and (b);

d) coating a metallic or ceramic solid homeycomb support with the slurry of step (c) and calcining said coated support;

e) dispersing a main catalytic metal selected from the group consisting of platinum, palladium, rhodium, ruthenium, iridium and mixtures thereof onto said coated support, calcining and recovering the resultant catalytic composite.

It is also another embodiment of the invention to provide a method of manufacturing a catalytic composite which comprises the steps of:

a) dispersing a first active component selected from the group consisting of the rare-earth oxides and a main catalytic metal selected from the group consisting of platinum, palladium, rhodium, ruthenium and

iridium onto a primary refractory inorganic oxide support;

b) dispersing a second active component which forms a stable sulfide under fuel rich conditions onto a secondary support selected from the group consisting of zirconia, titania, ceria, silica, magnesia, natural and synthetic zeolites and mixtures thereof;

c) preparing a slurry with the mixture of said supports formed from steps (a) and (b);

d) coating a metallic or ceramic solid honeycomb support with the slurry of step (c), calcining said coated support, and recovering the resultant catalytic composite.

It is also an embodiment of the invention to provide a method of minimizing the formation of hydrogen sulfide when automotive exhaust is contacted with a catalytic composite comprising contacting said exhaust with a catalytic composite comprising a mixture of a primary refractory inorganic oxide support having dispersed thereon a first active component selected from the group consisting of rare-earth oxides and mixtures thereof and of a secondary refractory inorganic oxide support selected from the group consisting of zirconia, titania, ceria, silica, magnesia, natural and synthetic zeolites and mixtures thereof having dispersed thereon a second active component selected from the group of metals which form a stable sulfide under fuel rich conditions, oxides of these metals and mixtures thereof, said mixture of supports or primary support having a noble metal selected from the group consisting of platinum, palladium, rhodium, ruthenium, iridium and mixtures thereof deposited thereon.

Other objects and embodiments will become more apparent after a more detailed description of the invention.

## DETAILED DESCRIPTION OF THE INVENTION

As heretofore indicated, the present invention relates to a catalytic composite and a method of manufacturing said composite comprising a mixture of a primary refractory inorganic oxide support having dispersed thereon at least one of a first active component selected from the group consisting of the rare earth oxides and a secondary refractory inorganic oxide support selected from the group consisting of zirconia, titania, ceria, silica, magnesia, natural and synthetic zeolites having dispersed thereon at least one of a second active component selected from the group of metals which form a stable sulfide under fuel rich conditions, said mixture of supports having a main catalytic element selected from the group consisting of platinum, palladium, rhodium, ruthenium and iridium dispersed thereon. The primary refractory inorganic oxide support may be selected from the group consisting of alumina, silica, aluminosilicates, zirconia, titania or mixtures thereof with alumina being preferred. Generally, the mixture of oxide supports can be conveniently employed in particulate form as pills, pellets, granules, rings, spheres, etc. Alternatively, a monolithic structure may be employed. The secondary refractory inorganic oxide support may be zirconia, titania, ceria, silica, magnesia, natural and synthetic zeolites with ceria being preferred.

The particulate form is especially desirable where large volumes of catalytic composites are needed, and for use in circumstances in which periodic replacement of the catalytic composite may be desired. In circumstances in which less mass is desirable or in which movement or agitation of particles of refractory inorganic oxide may result in attrition, dusting and resulting loss of disposed metals or undue increase in pressure drop across the particles, a monolithic structure is preferred.

In the employment of a monolithic structure, it is usually most convenient to employ the refractory inorganic oxide as a thin film or washcoat deposited on an inert carrier material which provides the structural support for said refractory oxide washcoat. The inert carrier material can be any refractory material. It is preferred that the carrier material be unreactive with the refractory oxide washcoat and not degraded by the gas to which it is exposed. Ceramic materials are preferred classes of carrier material. Examples of suitable ceramic materials include sillimanite, petalite, cordierite, mullite, zircon, zircon mullite, spodumene, alumina-titanate, etc.

The carrier material can best be utilized in any rigid unitary configuration which provides a plurality of pores or channels therethrough extending in the direction of gas flow. It is preferred that the configuration be a honeycomb configuration. The honeycomb structure can be used advantageously in either unitary form, or as an arrangement of multiple modules. The honeycomb structure is usually oriented such that gas flow is generally in the same direction as the cells or channels of the honeycomb structure. For a more detailed discussion of monolithic structures, refer to U.S. Patent 3,785,998 and U.S. Patent 3,767,453. The carrier material may also consist of any metal (including alloys) such as those disclosed in U.S. Patent No. 3,920,583 which can be fabricated into the desired form (e.g. honeycomb), are oxidation resistant and are otherwise capable of withstanding high temperatures.

The surface area of the material comprising the monolithic structure is not critical to the method of this invention. It is preferred that the micropore volume of the material be relatively low, and it is especially preferred that the material have a macropore distribution such that at least about 90% of the pore volume is in the pores having

a diameter of greater than about 2000 Angstroms. The geometric surface area of the monolithic structure, as opposed to the material of which the structure is made, should be maximized consistent with pressure drop limitations for the particular application of the catalytic composite of this invention. It is preferred that the surface area of the monolithic structure be from about 20 to about 1000 square meters per liter of structure, as measured by $N_2$ adsorption, where the volume of the structure is measured by its exterior dimensions. The geometric surface area of the monolithic structure, in terms of cell density, should be maximized consistent with pressure drop limitations, and is preferably in the range of from abut 200 to about 800 cells per square inch of cross-sectional area of the structure.

In one example of the invention a high surface area alumina is used as the primary inorganic oxide support. The alumina support preferably has a specific surface area ranging from 25 to 300 $m^2/g$ and more preferably ranges from about 100 to about 240 $m^2/g$. It preferably also has a total pore volume ranging from 0.5 to 2 $cm^3/g$ and more preferably from 0.8 to 1.7 $cm^3/g$. It preferably possesses a macroporosity such that the pore volume of the pores having a diameter of greater than 1,000 Angstroms ranges from about 0.05 to about 0.6 $cm^3/g$ and more preferably ranges from 0.2 to 0.5 $cm^3/g$.

One example of the method of preparation comprises first impregnating a high surface area alumina with a water soluble decomposable compound of the particular first active component selected from the group consisting of the rare earths. Examples of water soluble rare earth compounds include cerium acetate, lanthanum acetate, neodymium acetate, europium acetate, holmium acetate, yttrium acetate, praesodymium acetate, dysprosium acetate, cerium nitrate, lanthanum nitrate, neodymium nitrate, europium nitrate, holmium nitrate, yttrium nitrate, praesodymium nitrate, dysprosium nitrate, cerium chloride, lanthanum chloride, neodymium chloride, europium chloride, holmium chloride, yttrium chloride, praesodymium chloride, dysprosium chloride. Thus when cerium is the desired first active component, cerium acetate can be dissolved in water and a high surface area alumina can be added to the solution. This mixture can then be dried and calcined in air at a temperature of about 400° to about 700°C for a time of about one to three hours. This results in the formation of cerium oxide which is uniformly distributed throughout the alumina.

It is also contemplated as another embodiment of this invention to add the first active component to the primary refractory inorganic oxide support as a solid. Thus, after mixing, a homogeneous mixture of the two solids is obtained. The only criterion required of these solids is that they be insoluble in water and in the acid/water solution used to prepare the slurries of the supports as described hereinafter. Examples of these insoluble solids include cerium sulfate, lanthanum sulfate, neodymium sulfate, europium sulfate, holmium sulfate, yttrium sulfate, cerium oxalate, lanthanum oxalate, neodymium oxalate, europium oxalate, holmium oxalate, yttrium oxalate, cerium oxide, lanthanum oxide, neodymium oxide, europium oxide, holmium oxide, yttrium oxide, with the oxides being preferred. Thus a specific example consists of adding cerium oxide to an alumina powder.

A second step in this example of the method of preparation comprises impregnating a secondary inorganic oxide support with a water soluble salt of the second active component. Examples of secondary inorganic oxide supports include zirconia, ceria, titania, silica, magnesia, natural and synthetic zeolites. Additionally, examples of salts of second active components include nickel nitrate, zinc nitrate, cobalt nitrate, copper nitrate, lead nitrate, nickel chloride, zinc chloride, cobalt chloride, copper chloride, lead chloride, nickel acetate, zinc acetate, cobalt acetate, copper acetate, lead acetate. Thus, if ceria is the desired secondary refractory oxide support and nickel is the desired second active component then the ceria may be impregnated with an aqueous solution of nickel nitrate. After the ceria is impregnated with the nickel salt, the mixture is dried, and then calcined in air at a temperature of about 400° to about 700°C for about one to about 3 hours. This results in a uniform distribution of nickel oxide on the cerium oxide.

In the next step of this example of the method of preparation, the appropriate amounts of the primary refractory inorganic oxide support containing a first active component is mixed with the secondary refractory oxide support containing a second active component and a slurry is prepared using the combined powders. The slurry can be prepared by means known in the art such as combining the appropriate amounts of oxide powders with water and an acid such as nitric, hydrochloric, sulfuric acid, etc. The resultant slurry is milled for about 2 to 6 hours to form a usable slurry. This slurry can now be used to deposit a thin film or washcoat onto the monolithic carrier. It is preferred that the primary refractory oxide, such as alumina, be present on the monolithic support in amounts in the range from about 28g per liter of carrier volume to about 355g per liter of carrier volume, where the volume is measured by the exterior dimensions of the monolithic carrier structure.

Similarly, the concentration of the first active component, such as cerium or lanthanum, is preferred to be from about 3.5 g per liter to about 55 g per liter of monolithic carrier volume. The secondary support, such as ceria or zirconia, concentration is preferred to be from about 0.7 to about 35 g per liter of monolithic carrier volume. Finally, the second active component, such as nickel or cobalt, is preferred to be present in an amount in the range of about 0.7 to about 15 g per liter of monolithic carrier volume.

The final step in this example of the method of preparation comprises depositing at least one main catalytic element onto the mixed inorganic oxide layer. The main catalytic metal may be chosen from the group consisting of platinum, iridium, rhodium, palladium, ruthenium and mixtures thereof. The main catalytic metal may be incorporated into the mixed inorganic oxide support material in any suitable manner. The preferred method of dispersing the main catalytic metal onto the mixed inorganic oxide support containing a first and second active component involves the utilization of a water soluble decomposable compound of the particular main catalytic metal for impregnation of the monolithic carrier which has been coated with, for example, the cerium oxide/alumina plus nickel/ceria supports.

It is also contemplated as within the scope of this invention that the main catalytic metal be dispersed solely on the primary refractory inorganic oxide support which contains a first active component. This can be accomplished by impregnating a primary refractory oxide support having dispersed thereon a first active component with an aqueous solution of the main catalytic metal, drying and calcining in air. This primary refractory inorganic oxide support which has dispersed thereon at least one first active component and at least one main catalytic metal is now mixed with a second refractory inorganic oxide containing a second active component and then processed as described herein to form a slurry. Finally, this slurry is applied to a ceramic or metallic monolithic carrier, dried and calcined to give a catalytic composite. It should be pointed out that the method of preparation just described may yield a catalytic composite that does not have equivalent properties to a catalytic composite prepared by the method described above in this application.

When platinum and rhodium are the desired main catalytic metals, chloroplatinic acid and rhodium chloride are examples of soluble compounds which can be used for impregnating the support. The chloroplatinic acid and rhodium trichloride can be in a common aqueous solution or in separate aqueous solutions. Where both a platinum and a rhodium component are desired and separate aqueous solutions are used, the impregnation of the alumina or alumina plus cerium oxide support with the solutions can be performed sequentially in any order. Other water soluble compounds or complexes may be employed to prepare the impregnation solutions. These include ammonium chloroplatinate, hydroxy disulfite platinum (II) acid, bromoplatinic acid, platinum trichloride, platinum tetrachloride hydrate, platinum dichlorocarbonyl dichloride, dinitrodiamino platinum, sodium tetranitroplatinate, hexamminerhodium chloride, rhodium carbonylchloride, rhodium trichloride hydrate, rhodium nitrate, sodium hexachlororhodate, and sodium hexanitrorhodate.

Utilization of a platinum or rhodium chloride compound such as chloroplatinic acid or rhodium trichloride is ordinarily preferred. Hydrogen chloride, nitric acid or other suitable materials may be added to the solution in order to further facilitate the uniform distribution of the noble metal components throughout the alumina support material.

If it is desired to disperse palladium onto an inorganic oxide support, the palladium may be added to the inorganic oxide support by commingling the latter with an aqueous solution of chloropalladic acid, drying and calcining in air. Other water soluble compounds or complexes of palladium may be employed such as palladium chloride, palladium nitrate, diamminepalladium hydroxide, and tetramminepalladium chloride.

Further, when an iridium component is incorporated into the catalyst, the iridium component may be added to the inorganic oxide support by commingling the latter with an aqueous or anhydrous alcoholic solution of iridium salts. Examples of such salts are hexachloroiridate (IV) acid, hexachloroiridate (III) acid, dichlorodihydrooxoiridate (III) acid, ammonium hexachloroiridate (III), ammonium aquohexachloroiridate (IV), tetraamminedichloroiridate (III) chloride, and aquotetraammineiridate (III) chloride.

When the catalytic composite is deposited on a monolithic structure as heretofore described, the main catalytic metal content is such that it ranges from about 0.03 g to about 8.8 g per liter of monolithic carrier volume. In particular, when the main catalytic metal is platinum, the platinum content ranges from 0.15 g per liter to about 8.8 g per liter of monolithic carrier volume. Additionally, when the main catalytic metal is palladium, the palladium content ranges from 0.15 to 8.8 g per liter of monolithic carrier volume. Finally, when the main catalytic element is rhodium, the rhodium content ranges from 0.03 to 2.5 g per liter of monolithic carrier volume. If both platinum and rhodium are present, the ratio of the platinum content to rhodium content is from about 2:1 to about 20:1 platinum:rhodium. When the main catalytic metals are supported in another manner, such as upon pellets comprising an inorganic oxide, the metals are present in amounts ranging from about 0.01 to about 4 weight percent based on the weight of the pellets. Specifically, in the case of platinum the range is 0.1 to 4 weight percent, in the case of palladium the range is 0.1 to 4 weight percent, and in the case of rhodium the range is 0.01 to 2 weight percent. If both platinum and rhodium are present, the ratio of the platinum to rhodium content is from about 2:1 to about 20:12 platinum:rhodium.

A further essential feature of the present invention is the presence of a second active component which can act as a promoter or can form a stable sulfide under fuel rich conditions. This component should be selected from the group consisting of metals which form a sulfide such that the equilibrium constant, Kp, for the following reaction

$$MS + H_2 \rightleftharpoons H_2S + M-_r \quad (1)$$

is less than 2 x $10^{-3}$ at temperatures as high as 700°C, where MS represents a metal sulfide and $M_r$ represents a reduction product of the metal sulfide and Kp is defined as

$$Kp = \frac{P_{H2S}}{P_{H2}} \quad (2)$$

where $P_{H2S}$ is the partial pressure of hydrogen sulfide and $P_{H2}$ is the partial pressure of hydrogen in the exhaust gas for the above equilibrium. Specifically, this group of metals includes but is not limited to nickel, copper, cobalt, lead and zinc . A mechanism of how this group of metals minimizes the hydrogen sulfide production over automotive catalysts follows. It is to be understood that this mechanism is presented by way of illustration and is not intended to limit the broad scope of the invention.

Gasoline fuel typically contains about 0.005 to about 0.7 weight percent sulfur, usually as organic sulfur compounds. During the combustion process these sulfur compounds are converted to gaseous sulfur compounds such as $SO_2$ and $SO_3$. In order to completely combust the gasoline fuel, at least a stoichiometric weight amount of air is required. For example if the gasoline is indolene, the stoichiometric weight ratio is 14.56:1. of air:fuel. Using this ratio, therefore, one obtains that the gaseous sulfur compound concentration in the exhaust gas may range from about 3 to about 480 ppm.

During the time that the exhaust gas is stoichiometric or net oxidizing, certain components of the catalyst are capable of reacting with the gaseous sulfur compounds in the exhaust gas ($SO_2$ and $SO_3$) and with $O_2$ in the exhaust gas to form stable sulfates. For example, alumina would be expected to form sulfates of aluminum such as $Al_2(SO_4)_3$ at temperatures below about 400°C and at a gaseous sulfur oxides ($SO_x$) concentration of 20 ppm; cerium oxide will similarly form sulfates of cerium such as $Ce_2(SO_4)_3$ at the same gaseous $SO_x$ level at temperatures below about 500°C, while lanthanum oxide will form sulfates of lanthanum at the same $SO_x$ level but at temperatures below about 700°C.

The resultant sulfates formed on the catalytic composite at the conditions described above are unstable under fuel rich conditions. Therefore, when the air/fuel ratio becomes fuel rich, the solid sulfates will begin to decompose with the subsequent formation of hydrogen sulfide ($H_2S$), which will be emitted from the exhaust at concentrations that may be noxious. The reason that the concentrations of $H_2S$ may be excessively high is that large amounts of sulfates can be stored on the catalytic composite under periods of stoichiometric or fuel lean operations and then released during periods of fuel rich operation.

More specifically, under fuel rich conditions the following general equilibria occur.

$$MSO_4 + H_2 \rightleftharpoons H_2S + H_2O + M \quad (3)$$

$$M_r + H_2S \rightleftharpoons MS + H_2 \quad (4)$$

where M represents a metal, $MSO_4$ represents the metal sulfate, MS represents a metal sulfide and $M_r$ represents a reduction product of the metal sulfide, i.e. either the reduced metal or a lower oxidation state metal sulfide. Examples of metals which form sulfates by the equilibrium of equation (3) include aluminum, cerium, lanthanum, etc. Examples of metals which form stable sulfides by the equilibrium of equation (4) include nickel, cobalt, zinc, lead, etc.

The instantaneous concentration of gaseous sulfur compounds in the exhaust gas from the engine is typically low, such as about 20 ppm. If all of these gaseous sulfur compounds, i.e. $SO_2$ and $SO_3$ are converted to $H_2S$ during fuel rich operation then only 20 ppm of hydrogen sulfide would be present in the exhaust exiting the tailpipe. However, much larger amounts of $H_2S$ can be formed during fuel rich operation from the release of sulfur stored on the catalyst. It is possible to calculate whether a catalytic composite will release $H_2S$ or not by calculating the equilibrium $H_2S$ and $H_2$ concentrations for a given operating condition. The calculation involves minimizing the free energy of the total gaseous and solid catalyst component system at the operating condition. Some catalytic composites will react with high levels of $H_2S$ under fuel rich operation to reestablish equilibrium at much lower concentration of $H_2S$ exiting the catalyst such that the equilibrium concentration of $H_2S$ and $H_2$ have a Kp (equation 2) of less than 2.0 x $10^{-3}$. The second active components of the instant invention meet this criteria. During rich operation the second active component will react with all the $H_2S$ in the exhaust as it passes through the catalyst until a 20 ppm $H_2S$ concentration is reached, even if additional $H_2S$ is formed from the decomposition of stored sulfur species on the catalyst, in addition to the typical 20 ppm exhaust concentration of sulfur entering the catalyst from the engine.

Calculations of equilibrium constant have shown that metals, i.e. second-active components, which are within this group include but are not limited to nickel, cobalt, zinc, copper, lead, etc. Because these metals have such a low equilibrium constant for reaction (2), the metal sulfide is favored. This means that not only will the metal sulfate which was formed under fuel lean conditions from the second active component not decompose to release hydrogen sulfide, but these metals will scavenge any hydrogen sulfide that is released by the decomposition of sulfates of the primary support or first active component or other sources of $H_2S$. Therefore, release of hydrogen sulfide is minimized

In addition to minimizing the concentration of hydrogen sulfide, another embodiment of the present invention is to provide a catalytic composite which is more effective at treating an exhaust gas after exposure to high temperatures. As hereinbefore explained this advantage is obtained because the secondary active component is separated from the main catalytic metal such as platinum and from the primary support such as alumina. As a result, solid state reactions between the second active component and alumina or the main catalytic metal do not occur. These reactions are well known to be detrimental to catalyst activity. Thus, after the catalytic composite of the present invention is exposed to an exhaust gas having a temperature of 850°C, the catalytic composite of the present invention is more effective at treating an exhaust stream than a catalytic composite of the prior art. Since combustion of hydrocarbons and carbon monoxide takes place over the catalytic composite, the instantaneous catalyst temperature is expected to be much higher than 850°C, under certain operating conditions.

In order to more fully illustrate the advantages to be derived from the instant invention, the following examples are set forth. It is to be understood that the examples are only by way of illustration and are not intended as an undue limitation on the broad scope of the invention as set forth in the appended claims.

EXAMPLE I

This example describes a test developed to measure hydrogen sulfide emissions. The test consisted of two parts: storage of sulfur compounds and hydrogen sulfide release. The conditions for these two parts of the test are presented in Table I below.

TABLE 1

| Test Condition | Storage | Release |
|---|---|---|
| Inlet Temperature (°C) | 515 | 492 |
| Air/Fuel Ratio (Stoichiometry = 14.56) | 14.80 | 13.10 |
| GHSV($hr^{-1}$) | 63,000 | 63,000 |
| Duration (min) | 60 | 15 |
| Fuel Sulfur Level (ppm) | 120 | 120 |

The catalytic composite was first exposed to the storage condition to store sulfate. Then the air/fuel ratio was changed to the release condition. Exhaust samples were collected in scrubbers and analyzed for $H_2S$ using a colorimetric method established by the Environmental Protection Agency (EPA). Details on the $H_2S$ analysis method are available in EPA interim report EPA-600/2-80-068 which is available from the EPA. Samples were taken during the following time intervals: 0-1, 1-2, 2-3, 3-4, 9-10, and 14-15 minutes after switching to the release condition.

EXAMPLE II

The conventional catalytic composite was prepared by the following method. In a beaker, 5000 grams of pseudo-boehmite alumina and 13,562 grams of a solution of cerium acetate was mixed, which solution contained 7 weight percent cerium. The resultant mixture was stirred for 30 minutes, transferred to a shallow tray, dried for 4 hours at 150°C and finally calcined at 600°C for 1 hour. The calcined alumina/cerium oxide powder

was next stirred into a container which contained 5.33 liters of water and 48 mL of concentrated nitric acid $(HNO)_3$. This mixture was ball milled for 4 hours.

An oval shaped cordierite monolith with a minor axis of 3.2 in (8.1 cm), a major axis of 5.7 in (14.5 cm), a length of 6 in (15.2 cm) and having 400 square channels per square inch (62 square channels per square centimeter) of facial area was dipped into the above described slurry. After dipping, the excess slurry was blown out with an air gun. The slurry coated monolith was calcined for about 1 hour at 540°C. The above described dipping, blow-out and calcining steps were repeated until the monolith contained 120 g of coating per liter of monolith volume.

Next the platinum and rhodium metals were impregnated onto the above-described washcoated monolith. The above-described monolith was dipped into an aqueous solution containing 10.2 mg of chloroplatinic acid (29.5 weight % Pt) per gram of solution and 5.1 mg of rhodium chloride (9.8 weight % rhodium) per gram of solution. After dipping, the excess solution was blown out with an air gun and calcined for about one hour at 540°C. This catalytic composite was designated Catalyst A. The calculated composition of catalyst A in units of g/liter was: Pt = 1.56; Rh = 0.11; Ce= 23.2

## EXAMPLE III

A first experimental catalytic composite was prepared by the following method. In a beaker, 5000 grams of pseudo-boehmite alumina and 13,562 grams of a solution of cerium acetate were mixed, which solution contained 7 weight percent cerium. The resultant mixture was stirred for 30 minutes, transferred to a shallow tray, dried for 4 hours at 150°C and finally calcined at 600°C for 1 hour. The calcined alumina/cerium oxide powder was next stirred into a container which contained 5.33 liters of water and 48 mL of concentrated nitric acid ($HNO_3$).

In a beaker, 196 g of zirconia ($ZrO_2$) were added to 1250 g of an aqueous solution of cobalt acetate (11.6 weight percent cobalt). The resultant mixture was stirred for 30 minutes, dried at 200°C and then calcined at 540°C for one hour. The calcined powder was added to the alumina/cerium oxide slurry and the mixture ball milled for an additional 4 hours.

An oval shaped cordierite monolith with a minor axis of 3.2 in (8.1 cm), a major axis of 5.7 in (14.5 cm), a length of 6.0 in (15.2 cm) and having 400 square channels per square inch (62 square channels per square centimeter) of facial area was dipped into the above described slurry. After dipping, the excess slurry was blown out with an air gun. The slurry coated monolith was calcined for about 2 hours at 540°C. The above described dipping, blow-out and calcining steps were repeated until the monolith contained 128 g. of coating per liter of monolith volume.

Next the platinum and rhodium metals were impregnated onto the above-described washcoated monolith. The above-described monolith was dipped into an aqueous solution containing 10.2 mg of chloroplatinic acid (29.5 weight % Pt) per gram of solution and 5.1 mg of rhodium chloride (0.8 weight percent rhodium) per gram of solution. After dipping, the excess solution was blown out with an air gun and calcined for about one hour at 540°C. This catalytic composite was designated Catalyst B. The calculated composition of catalyst B in units of g/liter was: Pt = 1.56; Rh = 0.11; Ce = 23.3; Co = 3.53; Zr = 3.53.

## EXAMPLE IV

A second experimental catalytic composite was prepared by the following method. In a beaker, 13,562 grams of a solution of cerium acetate, which solution contained 7 weight percent cerium, were added to 5000 grams of pseudo-boehmite alumina. The resultant mixture was stirred for 30 minutes, transferred to a shallow tray, dried for 3 hours 40 mins at 150°C and finally calcined at 600°C for 1 hour. The calcined alumina/cerium oxide powder was next stirred into a container which contained 5.33 liters of water and 48 mL of concentrated nitric acid ($HNO_3$).

In a beaker, 1250 g of a solution of cobalt acetate (11.6 weight percent cobalt) and 188.4 g of cerium oxide ($CeO_2$) were mixed. The resultant mixture was stirred for 30 minutes, dried at 200°C and then calcined at 540°C for one hour. The calcined powder was added to the alumina/cerium oxide slurry and the mixture ball milled for 4 hours.

An oval shaped cordierite monolith as in Example III was dipped into the above described slurry. After dipping, the excess slurry was blown out with an air gun. The slurry coated monolith was calcined for about 2 hours at 540°C. The above described dipping, blow-out and calcining steps were repeated until the monolith contained 128 g of coating per liter of monolith volume.

Next the platinum and rhodium metals were impregnated onto the above-described washcoated monolith. The above-described monolith was dipped into an aqueous solution containing 10.2 mg of chloroplatinic acid

(29.5 weight % Pt) per gram of solution and 5.1 mg of rhodium chloride (9.8 weight percent rhodium) per grams of solution. After dipping the excess solution was blown out with an air gun and calcined for about one hour at 540°. This catalytic composite was designated Catalyst C. The calculated composition of catalyst C in units of g/liter was: Pt = 1.56; Rh = 0.11; Ce = 26.8; Co = 3.53.

EXAMPLE V

A third experimental catalytic composite was prepared by the following method. In a beaker, 5000 grams of pseudo-boehmite alumina and 13,562 grams of a solution of cerium acetate were mixed, which solution contained 7 weight percent cerium. The resultant mixture was stirred for 30 minutes, transferred to a shallow tray, dried for 4 hours at 150°C and finally calcined at 600°C for 1 hour. The calcined alumina/cerium oxide powder was next stirred into a container which contained 5.33 liters of water and 48 mL of concentrated nitric acid ($HNO_3$).

In a beaker, 188.4 g of cerium oxide were added to 1250 g of a solution of nickel acetate (11.6 weight percent nickel). The resultant mixture was stirred for 30 minutes, dried at 200°C and then calcined at 540°C for one hour. The calcined powder was added to the alumina/cerium oxide slurry and the mixture ball milled for 4 hours.

An oval shaped cordierite monolith as in Example III was dipped into the above-described slurry. After dipping, the excess slurry was blown out with an air gun. The slurry coated monolith was calcined for about 2 hours at 540°C. The above-described dipping, blow-out and calcining steps were repeated until the monolith contained 128 g of coating per liter of monolith volume.

Next the platinum and rhodium metals were impregnated onto the above-described washcoated monolith. The above-described monolith was dipped into an aqueous solution containing 10.2 mg of chloroplatinic acid (29.5 weight % Pt) per gram of solution and 5.1 mg of rhodium chloride (9.8 weight percent rhodium) per gram of solution. After dipping, the excess solution was blown out with an air gun and calcined for about one hour at 540°C. This catalytic composite was designated Catalyst D. The calculated composition of catalyst D in units of g/liter was: Pt = 1.56; Rh = 0.11; Ce= 26.8; Ni= 3.53.

EXAMPLE VI

EXAMPLE VI

Catalysts A through D were evaluated using the test described in Example I. The results of this evaluation are presented in Table 2.

Table 2

| Sample I.D. | $H_2S$ Concentration During Release Intervals (mins). (mg $H_2S/m^3$ of gas scrubbed) | | | | | |
|---|---|---|---|---|---|---|
| | 0-1 | 1-2 | 2-3 | 3-4 | 9-10 | 14-15 |
| Catalyst A (conventional) | 74 | 34 | 22 | 38 | 7 | 7 |
| Catalyst B | 5 | 0 | 0 | 0 | 0 | 0 |
| Catalyst C | 30 | 7 | 3 | 0 | 6 | 2 |
| Catalyst D | 0 | 13 | 5 | 9 | 15 | 37 |

The results presented in Table 2 clearly indicate that the presence of metals such as cobalt and nickel, when separated from the alumina and the noble metal (Catalysts B, C and D), greatly reduce the amount of hydrogen sulfide released from an automotive exhaust versus a conventional catalytic composite, especially in the first two minutes of fuel rich operation. Controlling the release of $H_2S$ during the first two minutes of fuel rich operation is most important because fuel rich modes of operation typically do not last substantially longer than two minutes. Additionally, the $H_2S$ emissions are most objectionable when released as large spikes such as exhibited by the conventional catalysts (Catalyst A), but not exhibited by the catalysts of the instant invention. The data show that all three catalytic composites prepared according to the instant invention minimize the $H_2S$ formation versus the conventional catalyst.

EXAMPLE VII

A fresh sample of catalyst A and catalyst B were prepared as stated in Example I and II respectively. These catalysts were mounted in a converter and placed in the exhaust stream of a gasoline fueled engine. The engine was operated according to the following cycles:

a) This durability cycle involved a 60 second cruise mode and a five second fuel cut mode. During the cruise mode, the engine operated at stoichiometry while during the fuel cut mode, the engine operated at a fuel lean condition that includes a temperature and an oxygen spike. Typically the exhaust temperature for the cruise mode was 760°C while for the fuel cut mode the exhaust temperature was 704°C. This cycle was repeated for 100 hours.

b) At the end of 100 hours of operation on the durability cycle of part A, the engine speed (revolutions per minute) and engine load were increased so that the catalyst bed temperature for the cruise mode was 850°C while the catalyst bed temperature for the fuel cut mode as 800°C. This cycle was repeated for 40 hours.

After catalysts A and B were exposed to the durability cycle as described above, they were evaluated using an engine dynamometer performance test. The test involves evaluating the catalyst at eight different air/fuel (A/F) ratio points (14.71, 14.66, 14.61, 14.56, 14.51, 14.46 and 14.41) at an inlet temperature of 450°C. At each A/F point, the air/fuel is oscillated plus or minus 0.1 A/F at one Hertz frequency. Conversions of hydrocarbon, carbon monoxide and nitric oxides were calculated at each A/F and then an integral performance conversion was obtained by averaging all the conversions.

The results of these evaluations are presented in Table 3.

TABLE 3

| Catalyst I.D. | Integral Percent Conversion | | |
|---|---|---|---|
| | HC | CO | $NO_x$ |
| Catalyst A (Conventional) | 63 | 47 | 47 |
| Catalyst B | 70 | 48 | 49 |

The data presented in Table 3 show that after a severe durability test, catalyst B, which contains cobalt supported on zirconia, is more effective at treating an exhaust gas from an internal combustion engine than the conventional catalyst A.

## Claims

1. A catalytic composite for treating a hot exhaust stream from an internal combustion engine which comprises a mixture of (1) a primary refractory inorganic oxide support having dispersed thereon a first active component selected from the group consisting of rare earth oxides and mixtures thereof, and (2) a secondary support selected from the group consisting of zirconia, titania, ceria, silica, magnesia, natural and synthetic zeolites and mixtures thereof, having dispersed thereon a second active component selected from the group consisting of

a) metals which form a stable sulfide under fuel rich conditions such that the equilibrium constant, Kp, is less than $2 \times 10^{-3}$ at temperatures as high as 700°C,

b) oxides of these metals, and

c) mixtures thereof,

said mixtures of supports or said primary support having a main catalytic metal selected from the group consisting of platinum, palladium, rhodium, ruthenium, iridium and mixtures thereof deposited thereon.

2. The catalytic composite of Claim 1 where said catalytic composite is deposited on a solid ceramic or metallic carrier.

3. The catalytic composite of Claim 2 where said main catalytic metal is platinum which is present in a concentration in the range of 0.15 to 8.8 g per liter of carrier volume.

4. The catalytic composite of Claim 2 where said main catalytic metal is a mixture of platinum or palladium and rhodium, said platinum or palladium is present in a range of 0.15 to 8.8 g per liter of carrier volume and said rhodium is present in a range of 0.03 to 2.5 g per liter of carrier volume.

5. The catalytic composite of Claim 2 where said rare earth oxide is cerium oxide or lanthanum oxide and is present in a range of 3.5 to 55 g per liter of carrier volume.

6. The catalytic composite of Claim 2 where the second active component is an oxide of a metal, the metal being selected from the group consisting of metals which form a stable sulfide such that the equilibrium constant, Kp, is less than $2 \times 10^{-3}$ at temperatures as high as 700°C.

7. The catalytic composite of Claim 6 where said metal is cobalt or nickel or zinc or copper and is present in a concentration of 0.7 to 15 g per liter of carrier volume.

8. The catalytic composite of Claim 2 where said secondary support is zirconia or ceria or titania which is present in a range of from 0.7 to 35 g per liter of carrier volume.

9. A method of manufacturing a catalytic composite for the treatment of an exhaust gas which comprises the steps of:

a) dispersing a first active component selected from the group consisting of the rare-earth oxides and mixtures thereof onto a primary refractory inorganic oxide support;

b) dispersing a second active component selected from the group consisting of metals, which form a stable sulfide under fuel rich conditions, oxides of the metals and mixtures thereof onto a secondary support selected from the group consisting of zirconia, titania, ceria, silica, magnesia, natural and synthetic zeolites and mixtures thereof;

c) preparing a slurry with the mixture of said supports formed in the steps (a) and (b);

d) coating a metallic or ceramic solid honeycomb support with the slurry of step (c) and calcining said coated

support by heating in air at a temperature of from 400°C to 700°C.

e) dispersing a main catalytic metal selected from the group consisting of platinum, palladium, rhodium, ruthenium, iridium and mixtures thereof onto the coated calcined support of (d), calcining by heating in air at a temperature of from 400°C to 700°C and recovering the resultant catalytic composite.

10. A method of manufacturing a pollution control catalytic composite which comprises the steps of:

a) dispersing a first active component selected from the group consisting of the rare-earth oxides and mixtures thereof and at least one main catalytic element selected from the group consisting of platinum, palladium, rhodium, ruthenium, iridium and mixtures thereof onto a primary refractory inorganic oxide support;

b) dispersing a second active component which is an oxide of a metal, the metal selected from the group consisting metals which form a stable sulfide under fuel rich conditions, oxides of these metals and mixtures thereof onto a secondary support selected from the group consisting of zirconia, titania, ceria, silica, magnesia, natural and synthetic zeolites and mixtures thereof;

c) preparing a slurry with the mixture of said supports formed in steps (a) and (b);

d) coating a metallic or ceramic solid honeycomb support with the slurry of step (c), calcining said coated support, by heating in air at a temperature of from 400°C to 700°C, and recovering the resultant catalytic composite;

11. A method of minimizing the formation of hydrogen sulfide when automotive exhaust is contacted with a pollution control catalyst comprising contacting said exhaust with the catalytic composite defined in any one of Claim 1 to 8 under pollution control conditions.

## Patentansprüche

1. Katalytische Zusammensetzung zur Behandlung eines heißen Abdampfes aus einer Verbrennungskraftmaschine, welche eine Mischung aus (1) einem primären feuerbeständigen anorganischen Oxidträger, auf dem eine erste aus der Gruppe bestehend aus Seltenerdmetalloxiden und deren Mischungen ausgewählte Wirkkomponente dispergiert ist, und (2) einem aus der Gruppe bestehend aus Zirkonoxid, Titandioxid, Ceroxid, Siliciumdioxid, Magnesiumoxid, natürlichen und synthetischen Zeolithen und deren Mischungen ausgewählten sekundären Träger, auf welchem eine zweite aus der Gruppe bestehend aus

a) Metallen, welche ein stabiles Sulfid unter brennstoffreichen Bedingungen bilden, so daß die Gleichgewichtskonstante, Kp, weniger als 2 x $10^{-3}$ bei Temperaturen bis zu 700°C ist,

b) Oxiden dieser Metalle, und

c) deren Mischungen

ausgewählte Wirkkomponente dispergiert ist, enthält, wobei auf den Mischungen der Träger oder auf dem primären Träger ein aus der Gruppe bestehend aus Platin, Palladium, Rhodium, Ruthenium, Iridium und deren Mischungen ausgewähltes Hauptkatalysatormetall abgeschieden ist.

2. Katalytische Zusammensetzung nach Anspruch 1, in der die katalytische Zusammensetzung auf einem festen Keramik- oder Metallträger abgeschieden ist.

3. Katalytische Zusammensetzung nach Anspruch 2, in der das Hauptkatalysatormetall Platin ist, welches in einer Konzentration im Bereich von 0,15 bis 8,8 g pro Liter des Trägervolumens vorliegt.

4. Katalytische Zusammensetzung nach Anspruch 2, in der das Hauptkatalysatormetall eine Mischung aus Platin oder Palladium und Rhodium ist, wobei das Platin oder Palladium in einem Bereich von 0,15 bis 8,8 g pro Liter des Trägervolumens und das Rhodium in einem Bereich von 0,03 bis 2,5 g pro Liter des Trägervolumens vorliegt.

5. Katalytische Zusammensetzung nach Anspruch 2, in der das Seltenerdmetalloxid Ceroxid oder Lanthanoxid ist und in einem Bereich von 3,5 bis 55 g pro Liter des Trägervolumens vorliegt.

6. Katalytische Zusammensetezung nach Anspruch 2, in der die zweite Wirkkomponente ein Oxid eines Metalles ist, wobei das Metall aus der Gruppe bestehend aus Metallen ausgewählt ist, welche ein stabiles Sulfid bilden, so daß die Gleichgewichtskonstante, Kp, weniger als 2 x $10^{-3}$ bei Temperaturen bis 700°C ist.

7. Katalytische Zusammensetzung nach Anspruch 6, in der das Metall Kobalt oder Nickel oder Zink oder Kupfer ist und in einer Konzentration von 0,7 bis 15 g pro Liter des Trägervolumens vorliegt.

8. Katalytische Zusammensetzung nach Anspruch 2, in der der sekundäre Träger Zirkonoxid oder Ceroxid oder Titandioxid ist, welches in einem Bereich von 0,7 bis 35 g pro Liter des Trägervolumens vorliegt.

9. Verfahren zum Herstellen einer katalytischen Zusammensetzung zur Behandlung eines Abgases mit den Verfahrensstufen

a) Dispergieren einer aus der Gruppe bestehend aus Seltenerdmetalloxiden und deren Mischungen ausgewählten ersten Wirkkomponente auf einen primären feuerbeständigen anorganischen Oxidträger,

b) Dispergieren einer aus der Gruppe bestehend aus Metallen, welche ein stabiles Sulfid unter brennstoffreichen Bedingungen bilden, Oxiden der Metalle und deren Mischungen ausgewählten zweiten Wirkkomponente auf einen aus der Gruppe bestehend aus Zirkonoxid, Titandioxid, Ceroxid, Siliciumdioxid, Magnesiumoxid, natürlichen und synthetischen Zeolithen und deren Mischungen ausgewählten sekundären Träger,

c) Herstellen einer Aufschlämmung mit den Mischungen der in den Stufen a) und b) gebildeten Träger,

d) Beschichten eines metallischen oder keramischen festen Wabenträgers mit der Aufschlämmung des Schrittes c) und Kalzinieren des beschichteten Trägers durch Erhitzen in Luft bei einer Temperatur von 400°C bis 700°C,

e) Dispergieren eines aus der Gruppe bestehend aus Platin, Palladium, Rhodium, Ruthenium, Iridium und deren Mischungen ausgewählten Katalysatormetalles auf den beschichteten kalzinierten Träger von d), Kalzinieren durch Erhitzen in Luft bei einer Temperatur von 400°C bis 700°C und Rückgewinnung der sich ergebenden katalytischen Zusammensetzung.

10. Verfahren zum Herstellen einer pollutionskontrollierenden katalytischen Zusammensetzung mit den Verfahrensstufen:

a) Dispergieren einer aus der Gruppe bestehend aus Seltenerdmetalloxiden und deren Mischungen ausgewählten ersten Wirkkomponente und zumindest eines aus der Gruppe bestehend aus Platin, Palladium, Podium, Ruthenium, Iridium und deren Mischungen ausgewählten Hauptkatalysatorelementes auf einen primären feuerbeständigen anorganischen Oxidträger,

b) Dispergieren einer zweiten Wirkkomponente, welche ein Oxid eines Metalles ist, wobei das Metall aus der Gruppe bestehend aus Metallen, welche ein stabiles Sulfid unter brennstoffreichen Bedingungen bilden, Oxiden dieser Metalle und deren Mischungen ausgewähltes Metall auf einem aus der Gruppe bestehend, aus Zirkonoxid, Titandioxid, Ceroxid, Siliciumdioxid, Magnesiumoxid, natürlichen und synthetischen Zeolithen und deren Mischungen ausgewählten sekundären Träger,

c) Herstellen einer Aufschlämmung mit der Mischung der in den Stufen a) und b) gebildeten Träger,

d) Beschichten eines metallischen oder keramischen festen Wabenträgers mit der Aufschlämmung des Schrittes c), Kalzinieren des beschichteten Trägers durch Erhitzen an Luft bei einer Temperatur von 400°C bis 700°C und Rückgewinnung der sich ergebenden katalytischen Zusammensetzung.

11. Verfahren zur Minimierung der Wasserstoffsulfidbildung, wenn Kraftfahrzeuggas mit einem Pollutionskontrollkatalysator in Kontakt gebracht wird, durch Inkontaktbringen des Abgases unter Pollutionskontrollbedingungen mit der katalytischen Zusammensetzung nach einem der Ansprüche 1 bis 8.

## Revendications

1. Composition catalytique pour traiter un courant de gaz d'échappement chauds provenant d'un moteur à combustion interne, qui comprend un mélange de (1) un support primaire en oxyde minéral réfractaire sur lequel est dispersé un premier composant actif choisi dans le groupe constitué des oxydes des terres rares et de leurs mélanges, et (2) un support secondaire choisi dans le groupe constitué de la zircone, du dioxyde de titane, de l'oxyde cérique, de la silice, de la magnésie, des zéolites naturelles et synthétiques et de leurs mélanges, sur lequel est dispersé un second composant actif choisi dans le groupe constitué:

a) des métaux qui forment un sulfure stable dans des conditions riches en carburant de sorte que la constante d'équilibre, Kp, est inférieure à $2 \times 10^{-3}$ à des températures aussi élevées que 700°C,

b) des oxydes de ces métaux, et

c) de leurs mélanges,

lesdits mélanges des supports ou dudit support primaire présentant sur leur dessus un dépôt d'un métal catalytique principal choisi dans le groupe constitué du platine, du palladium, du rhodium, du ruthénium, de l'iridium et de leurs mélanges.

2. Composite catalytique selon la revendication 1, dans lequel ledit composite catalytique est déposé sur un support solide en céramique ou en métal.

3. Composite catalytique selon la revendication 2, dans lequel le métal catalytique principal est le platine qui est présent dans une concentration comprise dans la gamme de 0,15 à 8,8 g par litre de volume de support.

4. Composite catalytique selon la revendication 2, dans lequel ledit métal catalytique principal est un mélange de platine ou de palladium et de rhodium, ledit platine ou palladium est présent dans une gamme de 0,15 à 8,8 g par litre de volume du support et ledit rhodium est présent dans une gamme de 0,03 à 2,5 g par litre de volume du support.

5. Composite catalytique selon la revendication 2, dans lequel ledit oxyde des terres rares est l'oxyde de cérium ou l'oxyde de lanthane et est présent dans une gamme de 3,5 à 55 g par litre de volume du support.

6. Composite catalytique selon la revendication 2, dans lequel le second composant actif est un oxyde d'un

métal, le métal étant choisi dans le groupe constitué des métaux qui forment un sulfure stable, de sorte que la constante d'équilibre, Kp, est inférieure à 2 x $10^{-3}$ à des températures aussi élevées que 700°C.

7. Composite catalytique selon la revendication 6, dans lequel ledit métal est le cobalt ou le nickel ou le zinc ou le cuivre et est présent dans une concentration de 0,7 à 15 g par litre de volume du support.

8. Composite catalytique selon la revendication 2, dans lequel ledit support secondaire est la zircone ou l'oxyde cérique ou le dioxyde de titane qui est présent dans une gamme de 0,7 à 35 g par litre de volume du support.

9. Procédé de fabrication d'un composite catalytique pour le traitement d'un gaz d'échappement, qui comprend les étapes consistant à :

a) disperser un premier composant actif choisi dans le groupe constitué des oxydes des terres rares et de leurs mélanges sur un support primaire en oxyde minéral réfractaire;

b) disperser un second composant actif choisi dans le groupe constitué des métaux, qui forment un sulfure stable dans des conditions riches en carburant, des oxydes de ces métaux et de leurs mélanges sur un support secondaire choisi dans le groupe constitué de la zircone, du dioxyde de titane, de l'oxyde cérique, de la silice, de la magnésie, des zéolites naturelles et synthétiques et de leurs mélanges;

c) préparer une bouillie avec le mélange desdits supports formés dans les étapes (a) et (b);

d) revêtir un support solide en nid d'abeille de métal ou de céramique avec la bouillie de l'étape (c) et calciner ledit support revêtu par chauffage dans l'air à une température comprise entre 400°C et 700°C;

e) disperser un métal catalytique principal choisi dans le groupe constitué du platine, du palladium, du rhodium, du ruthénium, de l'iridium et de leurs mélanges sur le support calciné revêtu de (d), calciner par chauffage dans l'air à une température comprise entre 400°C et 700°C et récupérer le composite catalytique obtenu.

10. Procédé de fabrication d'un composite catalytique anti-pollution, qui comprend les étapes consistant à :

a) disperser un premier composant actif choisi dans le groupe constitué des oxydes des terres rares et de leurs mélanges et d'au moins un élément catalytique principal choisi dans le groupe constitué du platine, du palladium, du rhodium, du ruthénium, de l'iridium et de leurs mélanges sur un support primaire en oxyde minéral réfractaire;

b) disperser un second composant actif qui est un oxyde d'un métal, le métal étant choisi dans le groupe constitué des métaux qui forment un sulfure stable dans des conditions riches en carburant, les oxydes de ces métaux et leurs mélanges sur un support secondaire choisi dans le groupe constitué de la zircone, du dioxyde de titane, de l'oxyde cérique, de la silice, de la magnésie, des zéolites naturelles et synthétiques et de leurs mélanges;

c) préparer une bouillie avec le mélange desdits suports formés dans les étapes (a) et (b);

d) revêtir un support solide en nid d'abeille de métal ou de céramique avec la bouillie de l'étape (c), calciner ledit support revêtu par chauffage dans l'air à une température comprise entre 400°C et 700°C, et récupérer le composite catalytique obtenu.

11. Procédé pour rendre minimale la formation d'hydrogène sulfuré lorsque le gaz d'échappement d'une automobile est mis en contact avec un catalyseur anti-pollution, comprenant la mise en contact dudit gaz d'échappement avec le composite catalytique défini dans l'une quelconque des revendications 1 à 8 dans des conditions antipollution.